# EUROPÄISCHE PATENTSCHRIFT

(11) **EP 1 932 491 B1**
(45) Veröffentlichungstag und Bekanntmachung des Hinweises auf die Patenterteilung: **24.06.2009**
(21) Anmeldenummer: 07021517.3
(22) Anmeldetag: 06.11.2007
(51) Int. Cl.: A61D 9/00, A01K 13/00

(54) **Leckschutz für Haustiere**
Lick protection for pets
Protection pour empêcher des animaux domestiques de se lécher

(30) Priorität: 12.12.2006 DE 202006018951 U
(43) Veröffentlichungstag der Anmeldung: 18.06.2008
(73) Patentinhaber: Schwarz, Alexandra Ines, 31226 Peine Rosenthal (DE); Schwarz, Jochen, 31226 Peine Rosenthal (DE)
(72) Erfinder: Schwarz, Alexandra Ines, 31226 Peine Rosenthal (DE); Schwarz, Jochen, 31226 Peine Rosenthal (DE)
(74) Vertreter: Hauck Patent- und Rechtsanwälte

(56) Entgegenhaltungen:
- DE-U1- 20 203 353
- US-A- 3 013 530
- US-A- 6 044 802

## Beschreibung

Die Erfindung betrifft einen Leckschutz für Haustiere nach dem Oberbegriff des Anspruchs 1.

Tiere folgen ihrem Instinkt, bei Wunden an ihrem Körper diese durch Lecken mit der Zunge zu reinigen. Ebenso wollen sich Tiere instinktiv mit ihren Extremitäten (Pfoten) am Kopf kratzen, wenn eine Verletzung oder ein Juckreiz im Kopfbereich auftritt. Dieses Belecken von Wunden oder Kratzen kann durch einen Leckschutz wirksam verhindert werden, der insbesondere nach tierärztlichen Operationen eingesetzt wird.

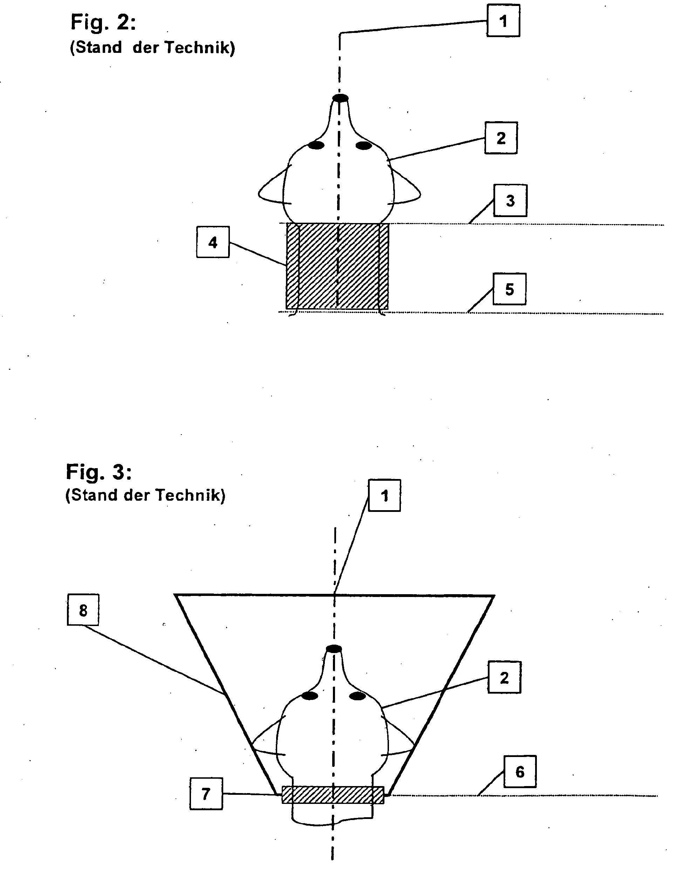

Ein aus dem Stand der Technik bekannter Leckschutz ist in der Figur 2 dargestellt. Er besteht im wesentlichen aus einem starren, rohrförmigen Gegenstand 4, der häufig aus Kunststoff gefertigt ist und dem Tier um den Hals gelegt wird. Der rohrförmige Gegenstand 4 erstreckt sich dabei von einer Ebene 3 im Übergangsbereich zwischen Kopf 2 und Hals des Tieres bis zu einer Ebene 5 im Übergangsbereich zwischen dem Hals und dem Körper des Tieres. Dadurch wird die Lage des Kopfes 2 fixiert und es wird verhindert, daß das Tier den Hals in Richtung des Körpers bewegen kann. Dieser bekannte Leckschutz schützt somit vor einem Belecken von Wunden am Körper, nicht jedoch vor einem Kratzen an einer Verletzung im Kopfbereich. Die natürliche Bewegungsfreiheit des Tieres wird durch diesen bekannten Leckschutz erheblich eingeschränkt. Tierübliche Tätigkeiten wie Senken oder Drehen des Kopfes zur Aufnahme von Gerüchen aus der Umgebung (z.B. vom Boden) können daher nur sehr bedingt durchgeführt werden. Das Tier kann seine Umwelt nicht mehr in tierüblicher Art und Weise wahrnehmen. Ein Eindrehen des Kopfes zum Schlafen ist ebenfalls nur sehr eingeschränkt möglich. Häufig versucht das Tier ständig, sich von dem Leckschutz zu befreien.

Ein weiterer aus dem Stand der Technik bekannter Leckschutz ist in der Figur 3 skizziert. Dieser besteht aus einem Hartplastiktrichter 8. Das Ende des Hartplastiktrichters 8 mit geringerem Durchmesser wird mit einem Halsband 7 am Hals des Tieres befestigt. Der Hartplastiktrichter 8 erweitert sich zur Kopfspitze des Tieres, so daß der Kopf des Tieres in dem Hartplastiktrichter liegt. Nachteilig an diesem bekannten Leckschutz ist, daß die natürliche Orientierungsfähigkeit des Tieres stark eingeschränkt wird. Die meisten Tiere orientieren sich bei Bewegung in ihrem Umfeld durch die Tasthaare an der Schnauze und an der optischen Erfassung ihres Umfelds, beispielsweise eines Gehweges. Die Erfassung von sichtbaren Vorgängen erfolgt durch ein Schwenken des Kopfes, wobei der Blickwinkel in Bezug auf den Kopf nach vorne gerichtet ist. Diese Arten der Orientierung werden jedoch bei dem bekannten Leckschutz verhindert, da dieser seitlich wesentlich über den Kopf des Tieres hinausragt. Durch diese künstliche Verbreiterung ist das Tier zwar in der Lage, seine natürliche Orientierung zu verwenden, stößt jedoch mit dem Hartplastiktrichter leicht gegen seitliche Hindernisse, kann diese beschädigen oder sich mit dem Hartplastiktrichter in Gegenständen der Umgebung verhaken, so daß es sich mitunter nicht alleine befreien kann. Ebenfalls eingeschränkt ist die Bewegungsfreiheit des Tieres, was zu den zuvor erwähnten Nachteilen führt. Insbesondere ist auch die Nahrungsaufnahme nur mit Einschränkungen möglich, da der vordere Überhang des Hartplastiktrichters verhindert, daß das Tier mit der Schnauze in einen Freßnapf gelangen kann.

Ein weiterer Leckschutz ist aus dem Gebrauchsmuster DE 202 03 353 U1 bekannt. Dieser Leckschutz besteht aus einem scheibenförmigen Rundkörper mit einer Öffnung, durch die der Hals des Tieres hindurchgeführt wird. Der Grundkörper besteht aus einem flexiblen Material und legt sich bei einem Versuch des Beleckens zwischen den Kopf und den Körper des Tieres. Durch diesen bekannten Leckschutz wird die Bewegungsfreiheit und die Orientierungsfähigkeit des Tieres wesentlich weniger eingeschränkt als durch die vorstehend beschriebenen Leckschutze. Nachteilig an diesem Leckschutz ist, dass der Durchmesser der Öffnung dem Durchmesser des Halses relativ genau angepasst sein muss, damit der Leckschutz passgenau am Hals anliegt und nicht durch das Tier abgestreift werden kann. Dies führt dazu, dass im wesentlichen für jeden Halsdurchmesser ein individueller Leckschutz gefertigt werden muss.

Aus der Druckschrift US 6,044,802 A ist ein Leckschutz für Haustiere bekannt, der aus einer oder zwei kreisrunden Scheiben aus einem Schaummaterial gefertigt ist. Der von der bzw. den Scheiben gebildete Grundkörper des Leckschutzes ist mit einem Überzug aus Vinyl versehen. Der Überzug hat eine schlauchförmige Manschette, die mit einem Zugband am Hals des Haustieres fixiert wird.

Davon ausgehend ist es die Aufgabe der Erfindung, einen verbesserten Leckschutz zur Verfügung zu stellen, der einen hohen Tragekomfort aufweist und universell einsetzbar ist.

Diese Aufgabe wird gelöst durch den Leckschutz für Haustiere mit den Merkmalen des Anspruchs 1. Vorteilhafte Ausgestaltungen sind in den Unteransprüchen angegeben.

Der Leckschutz für Haustiere hat einen scheibenförmigen, flexiblen Grundkörper, der eine Öffnung aufweist, wobei der Grundkörper im Bereich der Öffnung mit einer elastischen, weichen Manschette verbunden ist, die einen Abschnitt des Halses des Haustieres umschließt. Der Begriff "Leckschutz" wird dabei im üblichen Sinne sowohl für eine Schutzvorrichtung zum Schutz vor einem Belecken von Verletzungen als auch für eine Schutzvorrichtung, die in erster Linie vor einem Kratzen an Verletzungen schützen soll, verwendet. Der scheibenförmige, flexible Grundkörper hat in einem nicht-verformten Zustand im wesentlichen die Form einer Scheibe, ist jedoch ausreichend flexibel, daß er zwischen dem Körper und dem Kopf eines Tieres beispielsweise beim Eindrehen des Kopfes leicht verformbar ist und sich in einem gewissen Grad der Körperform des Tieres anpassen kann. Die elastische, weiche Manschette dient zur Fixierung des Grundkörpers am Hals des Tieres. Durch die Elastizität kann sich die Manschette unterschiedlichen Halsdurchmessem und Kopfformen anpassen. Da die Manschette weich ist, bietet sie einen besonders hohen Tragekomfort. Der von der Manschette umschlossene Abschnitt des Halses des Haustieres wird weniger durch den Leckschutz beansprucht als bei nach dem Stand der Technik bekannten Varianten, so daß die Tiere ein geringeres Bedürfnis zeigen, den Leckschutz abzustreifen.

In einer bevorzugten Ausgestaltung der Erfindung sind die Grundkörper und die Öffnung darin kreisförmig. Bevorzugt ist der Außendurchmesser des Grundkörpers so bemessen, daß das Haustier bei einem Eindrehen des Kopfes nicht mit der Schnauze über den äußeren Rand des Grundkörpers gelangen kann. Der Leckschutz bietet dadurch in allen Richtungen einen wirksamen Schutz vor einem Belecken, ohne die Bewegungs- und Orientierungsfreiheit des Tieres unnötig einzuschränken.

Gemäß einer weiteren bevorzugten Ausgestaltung der Erfindung ist der Durchmesser der Öffnung so bemessen, daß er etwas größer als der Durchmesser des Halses des Haustieres ist. Es ist dadurch gewährleistet, daß der Grundkörper sich bei angelegtem Leckschutz in einem Abstand vom Hals des Haustieres befindet, der Hals somit im wesentlichen nur in Kontakt mit der weichen Manschette ist. Dadurch wird der Tragekomfort optimiert.

In einer weiteren bevorzugten Ausgestaltung der Erfindung weist der Grundkörper eine Dicke von 1,5 cm bis 5 cm auf. Bevorzugt ist der Grundkörper ungefähr 3 cm dick. Versuche haben ergeben, daß diese verhältnismäßig große Materialstärke zu günstigen Flexibilitätseigenschaften des Grundkörpers führt; der Grundkörper bleibt leicht verformbar und nimmt gleichzeitig zuverlässig seine scheibenförmige Gestalt an.

In einer weiteren bevorzugten Ausgestaltung der Erfindung besteht der Grundkörper aus Schaumstoff. Dadurch ist der Grundkörper in sich relativ weich. Er kann somit gleichzeitig die Funktion eines Kopfkissens ausüben.

Bevorzugt besitzt der Schaumstoff eine hohe Festigkeit. Derartiger Schaumstoff mit einer erhöhten Festigkeit ist beispielsweise aus dem Bereich von Möbelpolstern bekannt. Die relativ hohe Festigkeit führt dazu, daß die Scheibenform des Grundkörpers stabil bleibt und der Leckschutz in alle Richtungen gleichmäßig vom Hals des Tieres absteht.

In einer bevorzugten Ausgestaltung der Erfindung ist der Grundkörper mit einem Stoffbezug versehen. Der Stoffbezug schützt die Oberfläche des Grundkörpers vor Verschmutzung und verleiht dem Leckschutz ein ansprechendes und griffgünstiges Äußeres.

Gemäß einer weiteren bevorzugten Ausgestaltung der Erfindung ist der Stoffbezug wasserabweisend und/oder abwaschbar. Dadurch ist der Leckschutz besonders leicht zu reinigen.

In einer weiteren bevorzugten Ausgestaltung der Erfindung weist der Stoffbezug ein Polyestergewebe auf. Vorteilhaft kann beispielsweise Persenning-Material verwendet werden. Dieses Material ist besonders leicht zu reinigen und verhindert das Eindringen von Wasser in den Grundkörper. Gleichzeitig schützt der besonders robuste Stoffbezug den Grundkörper vor Zerstörungsversuchen des Tieres sowie vor einem Verhaken des porösen Grundkörpermaterials mit Gegenständen aus der Umgebung.

Gemäß einer weiteren bevorzugten Ausgestaltung der Erfindung ist der von der Manschette umschlossene Abschnitt des Halses mindestens 2 cm lang. Dadurch wird der Tragekomfort weiter erhöht. Zusätzlich führt ein verhältnismäßig breiter umschlossener Halsabschnitt zu einer besseren Fixierung des Leckschutzes, bei der ein Verschwenken des Leckschutzes gegenüber der senkrecht zur Längsachse des Halses stehenden Ebene vermieden wird.

In einer weiteren bevorzugten Ausgestaltung der Erfindung ist die Manschette schlauchförmig. Die Schlauchform begünstigt ein Anliegen der Manschette in einem verhältnismäßig breiten Halsabschnitt.

Gemäß einer weiteren bevorzugten Ausgestaltung der Erfindung ist ein Ende der Manschette an dem Grundkörper befestigt. Dadurch kann der Leckschutz besonders einfach angelegt werden. Bevorzugt befindet sich der Grundkörper dabei in einer nah am Kopf gelegenen Ebene des Halses und die schlauchförmige Manschette erstreckt sich in Richtung des Körpers. Der Leckschutz befindet sich dadurch besonders nah am Kopf des Tieres und kann ein Belecken von Wunden besonders wirksam verhindern.

In einer weiteren bevorzugten Ausgestaltung der Erfindung verjüngt sich der Durchmesser der Manschette ausgehend von dem am Grundkörper befestigten Ende in Richtung des freien Endes. Das lose Ende läßt sich jedoch aufweiten, so daß ein Aufsetzen des Leckschutzes möglich ist. Gleichzeitig ergibt sich eine besonders gute Anpassung der Manschette an unterschiedliche Halsdurchmesser.

Die Manschette ist aus Stoff gefertigt. Durch Auswahl eines geeigneten Stoffes werden günstige elastische Eigenschaften sowie ein hoher Tragekomfort erreicht.

In einer weiteren bevorzugten Ausgestaltung der Erfindung ist die Manschette aus mehreren Stofflagen gefertigt. Dadurch kann die Festigkeit und Elastizität der Manschette verbessert werden.

In einer weiteren bevorzugten Ausgestaltung der Erfindung ist der Stoff der Manschette ein Gestrick. Ein gestrickter Stoff ist in sich sehr elastisch und bietet daher einen hohen Tragekomfort. Der gestrickte Stoff paßt sich ähnlich wie der Kragen eines Rollkragenpullovers gut dem Hals an.

Bevorzugt besteht der Stoff der Manschette aus Kunstfasern. Dadurch wird erreicht, daß das Material relativ haltbar und gut zu reinigen ist.

Gemäß einer weiteren bevorzugten Ausgestaltung der Erfindung ist im Bereich der Öffnung des Grundkörpers mindestens eine Schlaufe angeordnet, durch die ein Halsband hindurchgeführt werden kann. Bevorzugt werden beispielsweise drei Schlaufen verwendet. Nötigenfalls kann der Grundkörper mit Hilfe eines Halsbands noch sicherer am Hals des Tieres befestigt werden.

Die Erfindung wird nachfolgend anhand eines in einer Figur dargestellten Ausführungsbeispiels näher erläutert. Es zeigen:
- Fig. 1: eine schematische Darstellung eines erfindungsgemäßen Leckschutzes, angelegt am Hals eines Haustieres;
- Fig. 2: einen Leckschutz nach dem Stand der Technik;
- Fig. 3: einen weiteren Leckschutz nach dem Stand der Technik.

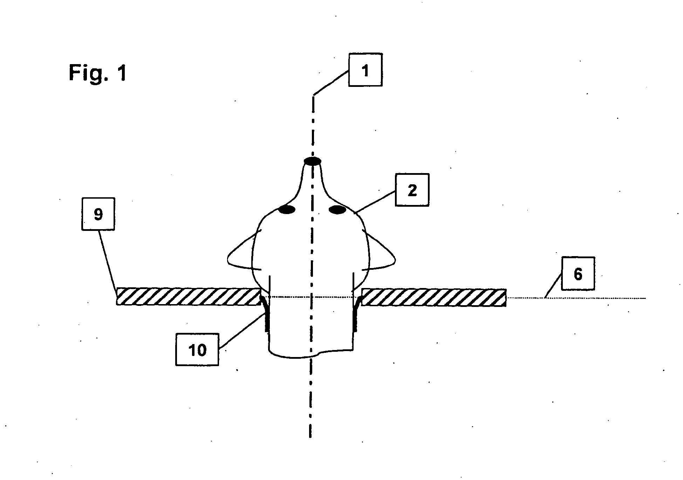

Die Figur 1 zeigt den Kopf 2 eines Haustieres. Die Längsachse des Halses ist mit 1 bezeichnet. Der erfindungsgemäße Leckschutz weist einen elastischen Grundkörper 9 auf, der in einer Ebene 6 senkrecht zur Längsachse 1 des Halses und in einem Übergangsbereich zwischen Hals und Kopf 2 des Tieres angeordnet ist. Am Hals des Tieres ist der flexible Grundkörper 9 mit einer elastischen Manschette 10 befestigt. Die Manschette 10 ist schlauchförmig wobei ein Ende der Manschette an der um den Hals des Tieres herum verlaufenden Öffnung an dem flexiblen Grundkörper 9 befestigt ist. Die elastische Manschette 10 erstreckt sich von der Ebene 6 nahe dem Kopf des Tieres entlang des Halses in Richtung zu dem nicht dargestellten Körper des Tieres. Dabei liegt die weiche, elastische Manschette 10 in einem einige Zentimeter langen Abschnitt am Hals des Tieres an.

Die Manschette 10 besteht aus einem textilen Kunstfasergestrick und ist fest mit dem Grundkörper des Leckschutzes verbunden. Die Manschette verjüngt sich in Richtung des losen Endes, läßt sich jedoch aufweiten, so daß das Aufsetzen des Leckschutzes ohne weitere Nachbearbeitung durchgeführt werden kann. Der Leckschutz kann somit bei Tieren mit verschiedenen Halsdurchmessem und Kopfformen verwendet werden.

Der Grundkörper 9 besteht aus einem festen Schaumstoff von ca. 3 cm Dicke. Der Außendurchmesser des kreisförmigen Grundkörpers 9 beträgt ca. 40 cm. Die Öffnung in dem Grundkörper 9 ist ebenfalls kreisförmig und weist einen Durchmesser von ca. 14 cm auf. Der Grundkörper 9 ist mit Persenning-Material aus Polyester bespannt.

Durch die Scheibenform des Grundkörpers 9 und dessen Anordnung im wesentlichen senkrecht zur Längsachse 1 des Halses wird das Tier und sein Leckbedürfnis im wesentlichen über die Querachse eingeschränkt. Dabei bleibt die Beweglichkeit des Kopfes und des Halses weitgehend erhalten.

Durch den Einsatz des erfindungsgemäßen Leckschutzes ist die Orientierungsfähigkeit des Tieres mittels der Tastsinne und der optischen Wahrnehmungsorgane am Kopf gewährleistet. Auch ist die volle Bewegungsfreiheit des Tierhalses gegeben. Bei Kontakt des Leckschutzes mit einem Gegenstand der Umgebung durch Bewegung des Tieres gibt der Leckschutz in seiner Form nach und das Tier kann den Gegenstand ohne weiteres passieren. Gleichzeitig wird eine Beschädigung von Gegenständen vermieden.

Wenn das Tier sich jedoch eindreht, um zum Beispiel eine Wunde am eigenen Körper zu belecken, liegt der Grundkörper 9 des Leckschutzes zwischen Kopf 2 und Körper des Tieres und verhindert so, daß das Tier mit seiner Schnauze und somit mit seiner Zunge an die Wunde gelangt.

Gleichzeitig verhindert der angelegte Leckschutz, daß das Tier mit seinen Extremitäten an Verletzungen des Kopfes gelangt. Der Grundkörper legt sich zwischen Tatze (Pfote) des Tieres und Kopf und zwingt das Bein (die Pfote), die Kratzbewegung am Kopf vorbei durchzuführen.

## Patentansprüche

1. Leckschutz für Haustiere mit einem scheibenförmigen, flexiblen Grundkörper (9), der eine Öffnung aufweist, und einer schlauchförmigen Manschette (10), die einen Abschnitt des Halses des Haustieres umschließt, **dadurch gekennzeichnet, daß** der Grundkörper (9) im Bereich der Öffnung mit der Manschette (10) verbunden ist und die Manschette (10) elastisch und weich und aus Stoff gefertigt ist, so dass die Manschette (10) sich durch ihre Elastizität unterschiedlichen Halsdurchmessern anpassen kann und in einem einige Zentimeter langen Abschnitt am Hals des Tieres anliegt.

2. Leckschutz nach Anspruch 1, **dadurch gekennzeichnet, daß** der Grundkörper (9) und die Öffnung darin kreisförmig sind.

3. Leckschutz nach Anspruch 1 oder 2, **dadurch gekennzeichnet, daß** der Außendurchmesser des Grundkörpers (9) so bemessen ist, daß das Haustier bei einem Eindrehen des Kopfes nicht mit der Schnauze über den äußeren Rand des Grundkörpers (9) gelangen kann.

4. Leckschutz nach einem der Ansprüche 1 bis 3, **dadurch gekennzeichnet, daß** der Durchmesser der Öffnung so bemessen ist, daß er etwas größer als der Durchmesser des Halses des Haustieres ist.

5. Leckschutz nach einem der Ansprüche 1 bis 4, **dadurch gekennzeichnet, daß** der Grundkörper (9) eine Dicke von 1,5 cm bis 5 cm aufweist.

6. Leckschutz nach einem der Ansprüche 1 bis 5, **dadurch gekennzeichnet, daß** der Grundkörper (9) aus Schaumstoff mit vorzugsweise hoher Festigkeit besteht.

7. Leckschutz nach einem der Ansprüche 1 bis 6, **dadurch gekennzeichnet, daß** der Grundkörper mit einem Stoffbezug versehen ist, der vorzugsweise wasserabweisend und/oder abwaschbar ist.

8. Leckschutz nach Anspruch 7, **dadurch gekennzeichnet, daß** der Stoffbezug ein Polyestergewebe aufweist.

9. Leckschutz nach einem der Ansprüche 1 bis 8, **dadurch gekennzeichnet, daß** der von der Manschette (10) umschlossene Abschnitt des Halses mindestens 2 cm lang ist.

10. Leckschutz nach einem der Ansprüche 1 bis 9, **dadurch gekennzeichnet, daß** ein Ende der Manschette (10) an dem Grundkörper (9) befestigt ist.

11. Leckschutz nach Anspruch 10, **dadurch gekennzeichnet, daß** der Durchmesser der Manschette (10) sich ausgehend von dem am Grundkörper (9) befestigten Ende in Richtung des freien Endes verjüngt.

12. Leckschutz nach einem der Ansprüche 1 bis 11, **dadurch gekennzeichnet, daß** die Manschette (10) aus mehreren Stofflagen gefertigt ist.

13. Leckschutz nach Anspruch 11 oder 12, **dadurch gekennzeichnet, daß** der Stoff ein Gestrick ist.

14. Leckschutz nach einem der Ansprüche 12 oder 13, **dadurch gekennzeichnet, daß** der Stoff aus Kunstfasern besteht.

15. Leckschutz nach einem der Ansprüche 1 bis 14, **dadurch gekennzeichnet, dass** im Bereich der Öffnung des Grundkörpers (9) mindestens eine Schlaufe angeordnet ist, durch die ein Halsband hindurchgeführt werden kann.

## Claims

1. Recovery collar for pets comprising a disk-shaped flexible base body (9) which comprises an opening, and a tubular sleeve (10) which encloses a portion of the neck of the pet, **characterised in that** the base body (9) in the region of the opening is connected to the sleeve (10), the sleeve (10) is resilient and soft and is made from a fabric such that the sleeve (10) is able to be adapted to different neck diameters and is located in a portion on the neck of the animal which is a few centimetres long.

2. Recovery collar according to Claim 1, **characterised in that** the base body (9) and the opening therein are circular.

3. Recovery collar according to Claim 1 or 2, **characterised in that** the external diameter of the base body (9) is dimensioned such that, when turning its head, the pet is not able to reach with its nose over the outer edge of the base body (9).

4. Recovery collar according to one of Claims 1 to 3, **characterised in that** the diameter of the opening is dimensioned such that it is slightly larger than the diameter of the neck of the pet.

5. Recovery collar according to one of Claims 1 to 4, **characterised in that** the base body (9) has a thickness of 1.5 cm to 5 cm.

6. Recovery collar according to one of Claims 1 to 5, **characterised in that** the base body (9) consists of foamed material, preferably with a high degree of stability.

7. Recovery collar according to one of Claims 1 to 6, **characterised in that** the base body is provided with a fabric cover, which is preferably water repellent and/or washable.

8. Recovery collar according to Claim 7, **characterised in that** the fabric cover comprises a polyester fabric.

9. Recovery collar according to one of Claims 1 to 8, **characterised in that** the portion of the neck enclosed by the sleeve (10) is at least 2 cm long.

10. Recovery collar according to one of Claims 1 to 9, **characterised in that** one end of the sleeve (10) is fastened to the base body (9).

11. Recovery collar according to Claim 10, **characterised in that** the diameter of the sleeve (10) tapers from the end fastened to the base body (9) in the direction of the free end.

12. Recovery collar according to one of Claims 1 to 11, **characterised in that** the sleeve (10) is made from more fabric layers.

13. Recovery collar according to Claim 11 or 12, **characterised in that** the fabric is a knitted fabric.

14. Recovery collar according to one of Claims 12 or 13, **characterised in that** the fabric consists of synthetic fibres.

15. Recovery collar according to one of Claims 1 to 14, **characterised in that** at least one loop through which a collar may be passed is arranged in the region of the opening of the base body (9).

## Revendications

1. Protection pour empêcher des animaux domestiques de se lécher comprenant un corps de base (9) flexible en forme de disque qui présente une ouverture, et un manchon (10) tubulaire qui entoure une partie du cou de l'animal domestique, **caractérisée en ce que** le corps de base (9) est assemblé avec le manchon (10) dans la zone de l'ouverture et le manchon (10) est fabriqué de manière élastique et souple et en étoffe, de sorte que le manchon (10) peut s'adapter à des diamètres de cou différents par son élasticité et est en contact avec le cou de l'animal sur une partie longue de quelques centimètres.

2. Protection selon la revendication 1, **caractérisée en ce que** le corps de base (9) et l'ouverture dans celui-ci sont circulaires.

3. Protection selon la revendication 1 ou 2, **caractérisée en ce que** le diamètre externe du corps de base (9) est dimensionné de telle sorte que l'animal domestique, lorsqu'il tourne la tête, ne peut parvenir avec son museau au-delà du bord extérieur du corps de base (9).

4. Protection selon l'une des revendications 1 à 3, **caractérisée en ce que** le diamètre de l'ouverture est dimensionné de telle sorte qu'il est un peu plus grand que le diamètre du cou de l'animal domestique.

5. Protection selon l'une des revendications 1 à 4, **caractérisée en ce que** le corps de base (9) présente une épaisseur de 1,5 cm à 5 cm.

6. Protection selon l'une des revendications 1 à 5, **caractérisée en ce que** le corps de base (9) est constitué de mousse avec de préférence une résistance élevée.

7. Protection selon l'une des revendications 1 à 6, **caractérisée en ce que** le corps de base est pourvu d'un revêtement en étoffe qui est de préférence hydrofuge et/ou lavable.

8. Protection selon la revendication 7, **caractérisée en ce que** le revêtement en étoffe présente un tissu de polyester.

9. Protection selon l'une des revendications 1 à 8, **caractérisée en ce que** la partie du cou entourée du manchon (10) est longue d'au moins 2 cm.

10. Protection selon l'une des revendications 1 à 9, **caractérisée en ce qu'**une extrémité du manchon (10) est fixée sur le corps de base (9).

11. Protection selon la revendication 10, **caractérisée en ce que** le diamètre du manchon (10) rétrécit à partir de l'extrémité fixée sur le corps de base (9) en direction de l'extrémité libre.

12. Protection selon l'une des revendications 1 à 11, **caractérisée en ce que** le manchon (10) est fabriqué à partir de plusieurs couches d'étoffe.

13. Protection selon la revendication 11 ou 12, **caractérisée en ce que** l'étoffe est un tricot.

14. Protection selon l'une des revendications 12 ou 13, **caractérisée en ce que** l'étoffe est constituée de fibres synthétiques.

15. Protection selon l'une des revendications 1 à 14, **caractérisée en ce qu'**au moins une boucle, à travers laquelle un collier peut être passé, est disposée dans la zone d'ouverture du corps de base (9).
